# EUROPEAN PATENT SPECIFICATION

(11) **EP 2 378 642 B1**
(45) Date of publication and mention of the grant of the patent: **17.07.2013**
(21) Application number: 10159792.0
(22) Date of filing: 13.04.2010
(51) Int. Cl.: H02K 3/24, H02K 9/22

(54) **Electric machine**
Elektrische Maschine
Machine électrique

(43) Date of publication of application: 19.10.2011
(60) Divisional application: 12003761.9
(73) Proprietor: Siemens Aktiengesellschaft, 80333 München (DE)
(72) Inventor: Besnerais, Jean Le, 7330, Brande (DK)

(56) References cited:
- EP-A1- 1 841 043
- DE-C1- 19 749 108
- JP-A- 9 093 869
- JP-A- 2005 269 786
- US-A- 3 109 947
- US-A1- 2006 145 548

## Description

The invention relates to an electric machine comprising a stator having a stator laminate and several end windings, a rotor, and a cooling means transporting a liquid cooling medium, whereby the cooling means axially projects out of the stator laminate and whereby at least the end windings are encased by a thermally conductive material, whereby the cooling means is a duct-like pipe.

Electric machines and generators in general are becoming more compact due to competitive pressures. The smaller these machines get, the greater the heat densities they will generate. Nowadays, with the advancement of power electronics, electric machines are being driven by means of variable speed drive units presenting an additional heat source due to the harmonics supplied by the inverter. When such machines are operated at low speed the cooling performance is further negatively affected. All of these factors lead to a temperature rise in the machine which will greatly affect its performance and life expectancy.

Particularly in liquid cooled electric machines having copper-based cooling means as tubes, pipes or the like most heat losses arise from so called copper losses. Due to the high axial thermal conductivity of copper most of the heat is usually transferred to the end windings where are located "hot spots". Thereby, the end windings are regularly surrounded by air having bad thermal conductive properties as is known.

Therefore, the end windings have been either air cooled or directly water cooled by the use of copper strands for instance as described in "Liquid Cooling of Turbine-Generator Armature Windings", Kilbourne, C.E.; Holley, C. H.

DE 197 49 108 C1 discloses an electrical machine comprising a stator lamination having grooves within its outer perimeter accommodating cooling means in the shape of axially extending pipes. The pipes are placed within the grooves and moulded with a heat conductive resin material.

JP 09-093869 A discloses a rotating machine having a liquid-cooled structure. Thereby, the space between the end windings or coils of the stator core and a cooling pipe is filled with a heat conductive resin.

US 3 109 947 discloses a stator member having a central bore and a plurality of winding slots for accommodating a main winding axially extending in end turns. A separate heat dissipating means comprising a heat conductive member made of metal is provided, whereby the outer surface of the heat conductive member is provided with a tube having a cooling medium circulating in it. The heat dissipating means may be inserted in the central bore of the stator member, so that the tube is in adjacent or contiguous association with the outer end of the end turns. However, the present measures do not provide a satisfying cooling performance of the electric machine in particular regarding the end windings of the stator.

Hence, it is an object of the invention to provide an electric machine having improved cooling capability, particularly regarding the end windings of the stator.

This is achieved by an electric machine as described above, wherein the thermally conductive material is a foamed material, whereby the foamed material is shaped or cut with a stator tooth width so as to be readily inserted between the end windings.

According to the invention the appearance of "hot spots" that is heat accumulation in the region of the end windings is confronted in two different but coactive ways. On the one hand, the given cooling means is axially elongated, i.e. it extends outside the stator, in particular the stator laminate. On the other hand, a thermally conductive material is used to encase the end windings of the stator so as to create a thermal bridge between the end windings and the extended cooling means. Large temperature gradients within the electric machine and in particular regarding the stator are counteracted. It is understood that also other or even all components of the electric machine may be encased by the thermally conductive material. Hence, a standard cooling means may also be used to provide proper cooling of the end windings as it is axially extended, whereby heat conveyance from the jeopardized regions of heat accumulation in particular at the end windings is assured by means of the thermally conductive material. The heat from the end windings is directly conducted to the cooling means and the stator stack. In this respect, the invention offers a constructively simple and cost effective way to obtain improved cooling properties of electric machines.

The cooling means is a duct-like pipe. Duct-like pipes are known and widely spread for use as standard cooling means. They are regularly made of copper and offer outstanding thermal properties especially in regard of heat conveyance (cf. λ_{Cu} ≈ 400 W/mK). Further, copper is a ductile and malleable material which is easily worked. Of course, other thermally conductive materials may be used as well. The duct-like pipe may have a meander-like shape and hence is distributed with a large surface giving rise to good heat exchange within the stator laminate. The cooling means features proper connecting portions like inlets and outlets for connecting with a cooling liquid providing cooling system. The cooling liquid may be deionised water for example.

The thermally conductive material may be directly attached to the stator structure. In this manner, a proper heat exchange between the stator and the thermally conductive material is assured as a close contact, that is the thermally conductive material tightly abuts the stator, is provided. Thus, the creation of air holes, air gaps and the like which would worse heat flux is prevented.

Preferably, the thermally conductive material has a thermal conductivity of at least 100 W/mK. In such a way it is assured that the thermally conductive material shows good heat transfer behaviour i.e. is able to conduct or transfer appropriate amounts of heat from where they originate to the cooling means. Generally, it is intended that the thermally conductive material has λ-values of more than 100 W/mK, anyhow exceptions may also be possible, that is λ-values of the thermally conductive material less than 100 W/mK.

The thermally conductive material is a foamed material. Hence, the invention uses a highly thermally conductive and low density material for encasing the end windings and if need be other parts of the electric machine. Foamed materials are regularly easy to process and can be individually fitted to a wide spectrum of shapes. Further, reworking, finishing and the like are easy to execute as foamed materials may be simply fitted for example by cutting.

The foamed material is shaped or cut with a stator tooth width so as to be readily inserted between the end windings. For a stable attachment glues or the like may be used to properly mount the foamed material to the stator. Additionally, a number of shaped foamed material parts may be glued together. The foam may have an integral structure, thus providing good specific mechanical properties.

The foamed material favourably has a density in the range of 100 - 800 kg/m³, in particular 300 - 500 kg/m³. Low densities contribute to a reduction of weight and thus support lightweight constructions. Of course, other densities are possible as well. Carbon fibre foams having thermal conductivity of 100 W/mK and densities in the range of 400 kg/m³ are preferably used as thermally conductive foamed material as they show both good thermal properties and low weight.

In a further embodiment of the invention the end windings are torn in different angular positions. In the exemplary case of three end windings i.e. three phases the end windings may successively be torn in 0, 45, and 90° so as to increase the space for the cooling means giving rise to an improved cooling efficiency altogether. Other angles may be applicable as well, whereby the premise of providing a maximum of space for the cooling means should be kept in mind.

In the following the invention is described in detail as reference is made to the figures, whereby
- fig. 1: shows a principle detail view of an electric machine according to an exemplary embodiment of the invention;
- fig. 2: shows a principle detail view of an electric machine according to an exemplary embodiment of the invention;
- fig. 3: shows a principle detail view of an electric machine according to an exemplary embodiment of the invention;
- fig. 4: shows a principle detail view of an electric machine according to an exemplary embodiment of the invention;
- fig. 5: shows a principle detail view of an electric machine not according to an exemplary embodiment of the invention; and
- fig. 6: shows a principle detail view of an electric machine not according to an exemplary embodiment of the invention.

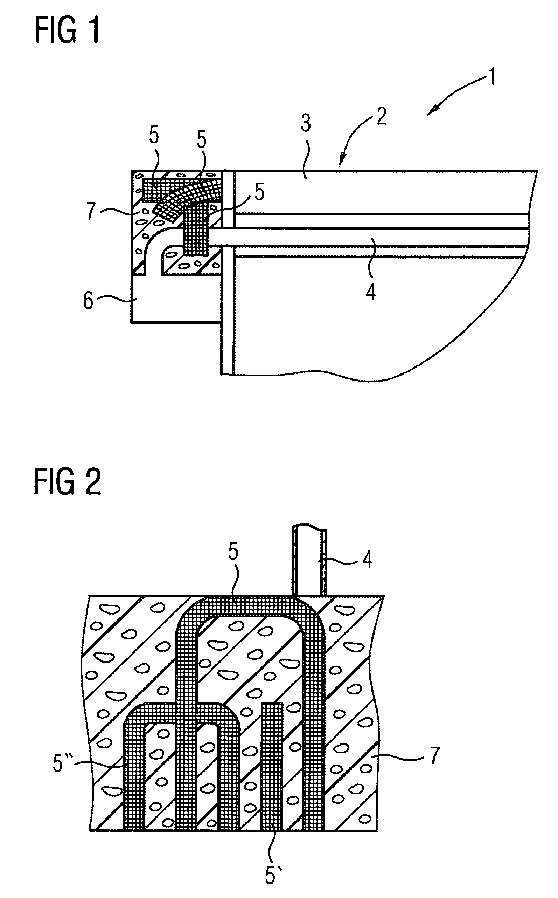

Fig. 1 shows a principle detail view of an electric machine 1 according to an exemplary embodiment of the invention, whereby essentially only relevant parts in view of the invention that is the stator 2 comprising a stator laminate 3 or stack and a cooling means in form of a standard duct-like pipe 4 made of copper can be seen. A not shown cooling liquid like deionised water or the like flows through the duct-like pipe 4, which cooling liquid is supplied by a not shown cooling liquid providing system. The stator 2 comprises three stator windings whereof only the end windings 5 are shown as the remainder of the stator windings is surrounded by the stator laminate 3. The duct-like pipe 4 is elongated in axially longitudinal direction so that it projects outside the stator 2. The duct-like pipe 4 further communicates with a distribution chamber 6. Apart from that, the duct-like pipe 4 is distributed in a meander-like shape throughout the stator 2, whereby the bends are preferably located at the ends of the stator 2, i.e. in the region of the end windings 5. Further, a thermally conductive material in form of a foam 7 encases the end windings 5 of the stator 2, thereby providing heat flow from the end windings 5 to the duct-like pipe 4 in terms of a thermal bridge avoiding problematic heat accumulation in the region of the end windings 5. Thus, heat losses from the end windings 5 are directly conducted to the stator laminate 3 and the extended duct-like pipe 4. The foam 7 is carbon fibre foam having a thermal conductivity of ca. 100 W/mK and a density of ca. 400 kg/m³. Air-cooling and/or liquid cooling by the use of separate copper-strands is not necessary.

The end windings 5 are torn in 0, 45, and 90° so as to establish a maximum space for the foam 7 and the duct-like pipe 4, whereby the foam 7 is cut with a stator tooth width so as to be readily inserted in the gap between the end windings 5 and the duct-like pipe 4. The foam 7 is glued to the stator 2 i.e. the stator laminate 3 so that vacancies filled with air may not occur. Further, the foam 7 may be divided in individually shaped foam parts bonded to each other by an adhesive or glue. Mechanically fastening means as screws, bolts, clips, retainers or the like may be alternatively or additionally employed for attaching foamed parts to each other and/or the stator 2.

Figures 2 - 4 show principle detail views of an electric machine 1 according to an exemplary embodiment of the invention depicting different arrangements of the end windings 5, 5', 5" for three different phases, the duct-like pipe 4 and the foam 7. The latter provides a thermal bridge between the end windings 5, 5', 5" and the duct-like pipe 4 dissipating excess heat from the end windings 5, 5', 5" .

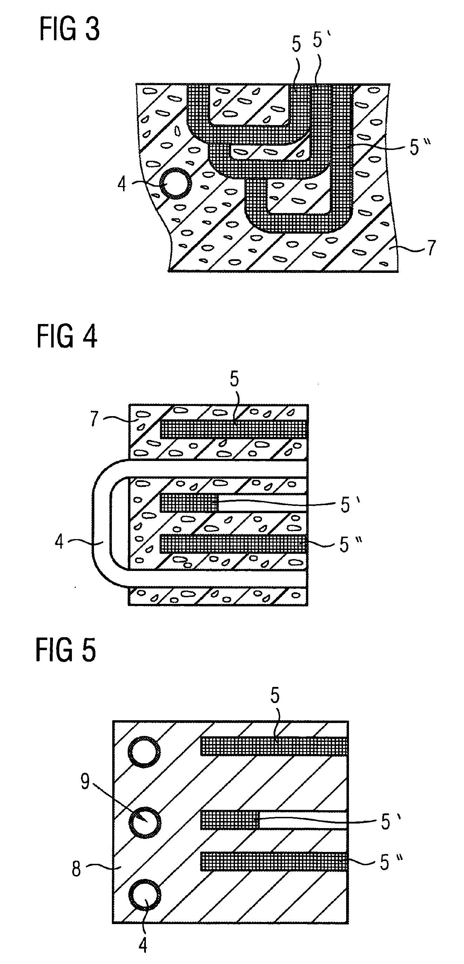

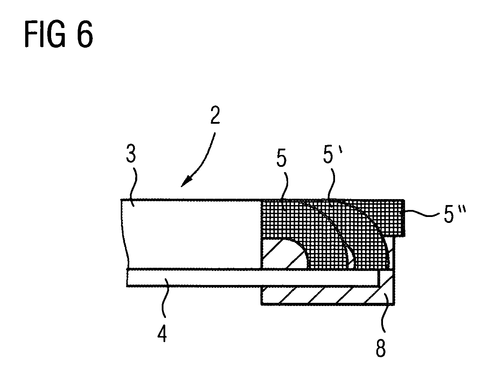

Figures 5 and 6 show principle detail views of an electric machine 1 not according to an exemplary embodiment of the invention. The essential difference to the above described embodiments according to the inventive principle is that a metallic plate 8 is used as thermally conductive material instead of the foam 7. The metallic plate 8 which may be made of aluminium, copper or the like also provides proper heat transfer from the end windings 5 to the duct-like pipe 4. The attachment of the metallic plate 8 may be accomplished by an adhesive, mechanical fastening means and/or by intermingling with the end windings 5 (cf. fig. 5). The metallic plate 8 comprises bores 9 for accommodating the duct-like pipe 4. Otherwise the bores 9 may act as duct-like pipes 4 themselves, whereby a proper connection of the bores 9 and the existing duct-like pipe 4 that is the cooling means of the stator 2 must be assured.

## Claims

1. Electric machine comprising a stator having a stator laminate (3) and several end windings, a rotor, and a cooling means transporting a liquid cooling medium, whereby the cooling means axially projects out of the stator laminate (3) and whereby at least the end windings (5) are encased by a thermally conductive material, whereby the cooling means is a duct-like pipe (4), **characterised in that** the thermally conductive material is a foamed material (7), whereby the foamed material (7) is shaped or cut with a stator tooth width so as to be readily inserted between the end windings (5).

2. Electric machine according to claim 1, wherein the thermally conductive material is directly attached to the stator (2).

3. Electric machine according to claim 1 or 2, wherein the thermally conductive material has a thermal conductivity of at least 100 W/mK.

4. Electric machine according to one of the preceding claims, wherein the foamed material (7) has a density in the range of 100 - 800 kg/m³, in particular 300 - 500 kg/m³.

5. Electric machine according to one of the preceding claims, wherein the foamed material (7) is carbon fibre foam.

6. Electric machine according to one of the preceding claims, wherein the end windings (5) are torn in different angular positions.

## Patentansprüche

1. Elektrische Maschine, welche einen Stator mit einem Statorblech (3) und mehreren Endwindungen, einen Rotor und eine Kühleinrichtung, die ein flüssiges Kühlmedium transportiert, umfasst, wobei die Kühleinrichtung axial aus dem Statorblech (3) herausragt und wobei mindestens die Endwindungen (5) von einem wärmeleitfähigen Material ummantelt sind, wobei die Kühleinrichtung ein kanalförmiges Rohr (4) ist, **dadurch gekennzeichnet, dass** das wärmeleitfähige Material ein Schaumstoffmaterial (7) ist, wobei das Schaumstoffmaterial (7) mit einer Statorzahnbreite geformt oder zugeschnitten ist, so dass es leicht zwischen die Endwindungen (5) eingesetzt werden kann.

2. Elektrische Maschine nach Anspruch 1, wobei das wärmeleitfähige Material direkt an dem Stator (2) befestigt ist.

3. Elektrische Maschine nach Anspruch 1 oder 2, wobei das wärmeleitfähige Material eine Wärmeleitfähigkeit von mindestens 100 W/mK aufweist.

4. Elektrische Maschine nach einem der vorhergehenden Ansprüche, wobei das Schaumstoffmaterial (7) eine Dichte im Bereich von 100 - 800 kg/m³, insbesondere von 300 - 500 kg/m³ aufweist.

5. Elektrische Maschine nach einem der vorhergehenden Ansprüche, wobei das Schaumstoffmaterial (7) Kohlefaser-Schaumstoff ist.

6. Elektrische Maschine nach einem der vorhergehenden Ansprüche, wobei die Endwindungen (5) in verschiedenen Winkelpositionen gerissen sind.

## Revendications

1. Machine électrique comprenant un stator ayant un noyau stratifié de stator (3) et plusieurs enroulements d'extrémité, un rotor, et un moyen de refroidissement transportant un agent de refroidissement liquide, moyennant quoi le moyen de refroidissement dépasse axialement du noyau stratifié de stator (3) et moyennant quoi au moins les enroulements d'extrémité (5) sont entourés par un matériau thermiquement conducteur, moyennant quoi le moyen de refroidissement est un tuyau de type conduite (4), **caractérisée en ce que** le matériau thermiquement conducteur est un matériau expansé (7), moyennant quoi le matériau expansé (7) est mis en forme ou découpé avec une largeur de dents de stator de manière à être facilement inséré entre les enroulements d'extrémité (5).

2. Machine électrique selon la revendication 1, dans laquelle le matériau thermiquement conducteur est directement fixé au stator (2).

3. Machine électrique selon la revendication 1 ou 2, dans laquelle le matériau thermiquement conducteur a une conductivité thermique d'au moins 100 W/mK.

4. Machine électrique selon l'une des revendications précédentes, dans laquelle le matériau expansé (7) a une densité dans la plage de 100 à 800 kg/m³, en particulier de 300 à 500 kg/m³.

5. Machine électrique selon l'une des revendications précédentes, dans laquelle le matériau expansé (7) est de la mousse en fibres de carbone.

6. Machine électrique selon l'une des revendications précédentes, dans laquelle les enroulements d'extrémité (5) sont déchirés dans différentes positions angulaires.
